# EUROPÄISCHE PATENTSCHRIFT

(11) **EP 1 318 336 B1**
(45) Veröffentlichungstag und Bekanntmachung des Hinweises auf die Patenterteilung: **29.07.2009**
(21) Anmeldenummer: 02027068.2
(22) Anmeldetag: 03.12.2002
(51) Int. Cl.: F16H 63/34

(54) **Kraftfahrzeug mit einem Automatikgetriebe**
Vehicle with automatic gearbox
Véhicule automobile équipé d'une boîte de vitesses automatique

(30) Priorität: 05.12.2001 DE 10159763
(43) Veröffentlichungstag der Anmeldung: 11.06.2003
(73) Patentinhaber: AUDI AG, 85045 Ingolstadt (DE)
(72) Erfinder: Kischkat, Ralf, Dr., 85057 Ingolstadt (DE)
(74) Vertreter: Thielmann, Frank

(56) Entgegenhaltungen:
- EP-A- 0 814 287
- DE-A1- 19 729 354
- US-A- 2 992 693
- US-A- 4 332 305

## Beschreibung

Die Erfindung betrifft ein Kraftfahrzeug mit einem Automatikgetriebe mit über einen Wählhebel, der mit einem getriebeseitigen Positionssteller mechanisch gekoppelt ist erfolgenden manuellen Schaltbetätigung, wobei Mittel zum automatischen Schalten des Automatikgetriebes in eine Parksperrenstellung in Abhängigkeit wenigstens eines Betriebsparameters vorgesehen sind.

Seit kurzem sind die ersten Kraftfahrzeuge mit Automatikgetriebe bekannt, bei denen das Getriebe mit der Shift-by-Wire-Technik geschalten wird. Der sogenannte Fahrerwunsch, also die vom Fahrer gewünschte Automatikgetriebeposition wird bei diesen Kraftfahrzeugen nicht mehr über eine mechanische Kopplung eines Wählhebels mit einem getriebeseitigen Positionssteller übertragen, sondern von einer elektronischen Fahrerwunscherfassung. Der Fahrerwunsch wird in elektrische Signale umgewandelt und über ein Steuergerät wird dann eine Aktorik bzw. ein Positionssteller am Automatikgetriebe angesteuert, worüber dann die gewünschte Position ("N", "R", "P" ...) eingestellt wird. Da hier der Schaltbetrieb des Automatikgetriebes elektronisch gesteuert wird ist es möglich, beliebige Schaltmuster automatisch schalten zu können. Je nachdem wie die Programmsteuerung des Schaltbetriebes ausgelegt ist kann abhängig vom Vorliegen bestimmter Schaltbedingungen bzw. erfasster Betriebsparameter der Schaltbetrieb gesteuert werden, auch ohne dass letztlich der Fahrer einen bestimmten Fahrerwunsch äußert. Dies ist beispielsweise der Fall, wenn der Fahrer das Auto parkt und der Motor abgestellt wird. Die Steuerung schaltet das Automatikgetriebe dann automatisch in eine Parksperrenstellung, ohne dass der Fahrer hierfür einen Fahrerwunsch äußern muss. Das heißt er kann das Fahrzeug in einer beliebigen Getriebeposition abstellen, die Parkposition "P" wird automatisch eingenommen. Um dies bei diesen Fahrzeugen zu ermöglichen kommt in der Regel ein nicht rastierender Wählhebel, über den der Fahrer sein Getriebe-oder Schaltwunsch äußert und über den die Fahrerwunscherfassung erfolgt, zum Einsatz. Dieser Wählhebel, der einer Art Joystick gleicht, kehrt stets in eine Nulllage zurück, nachdem der Fahrer einen Schaltwunsch geäußert hat. Wenn also die Parkstellenposition eingenommen wird ist es hier nicht erforderlich, in irgendeiner Form den Wählhebel bewegen zu müssen.

Anders jedoch ist der Betrieb bei einem Kraftfahrzeug mit Automatikgetriebe und manueller Schaltbetätigung, wobei hier die Schaltbetätigung über einen mit einem getriebeseitigen Positionssteller mechanisch über einen Seilzug oder ein Schaltgestänge gekoppelt Wählhebel erfolgt. Der Fahrer muss den Wählhebel für jeden Schaltwunsch in eine bestimmte Position schieben, wo er arretiert wird. Wenn der Fahrer das Fahrzeug verlassen will muss er zwingend den Wählhebel in die Stellung "P" bringen, damit der Positionsgeber über die mechanische Kopplung gesteuert das Automatikgetriebe in die Parkstellenposition bringen kann. Andernfalls ist das Fahrzeug nicht gegen Wegrollen gesichert. Einerseits ist dies umständlich, andererseits kann es bei einer Fehlbedienung seitens des Fahrers auch durchaus zu einer Situation kommen, in der die Parkstellenposition nicht eingelegt und das Fahrzeug folglich nicht gegen Wegrollen gesichert ist.

Aus der US 2,992,693 ist ein mechanisches Automatikgetriebe bekannt. Zum automatischen Schalten des Automatikgetriebes in eine Parksperrenstellung ist eine Kupplung der Bewegung der Autotür an die Bewegung eines Federschalters vorgesehen, wobei über die Bewegung des Federschalters das Schalten des Automatikgetriebes in eine Parksperrenstellung gesteuert wird.

Die DE 197 29 354 A1 offenbart ein "shift-by-wire"-Automatikgetriebe, bei dem die Motorstartfreigabe in Abhängigkeit der Stellung des Getriebes erfolgt. Die Parkposition P kann im Getriebe automatisch in Abhängigkeit eines Abziehens des Zündschlüssels erfolgen.

Der Erfindung liegt damit das Problem zugrunde, ein Kraftfahrzeug mit einem manuell zu schaltenden Automatikgetriebe anzugeben, das hier Abhilfe schafft.

Zur Lösung dieses Problems ist bei einem Kraftfahrzeug der eingangs genannten Art erfindungsgemäß vorgesehen, dass als Betriebsparameter der Betriebszustand des Motors und die Fahrzeuggeschwindigkeit dienen.

Die erfindungsgemäß vorgesehenen Schaltmittel ermöglichen es mit besonderem Vorteil, ein "gewöhnliches", manuell zu schaltendes Automatikgetriebe bei Vorliegen einer bestimmten Ausgangssituation in eine Parksperrenstellung zu schalten. Als Betriebsparameter werden dabei einerseits der Betriebszustand des Motors und andererseits die Fahrzeuggeschwindigkeit erfasst. Ist beispielsweise der Zustand "Motor aus" über eine geeignete Sensorik sowie die Bedingung "Fahrzeuggeschwindigkeit < Schwellwert" sicher erkannt, so liegen die relevanten Betriebsparameter vor, die dann zum automatischen Einlegen der Parksperrenstellung über die erfindungsgemäß vorgesehenen Mittel führen, ohne dass der Fahrer hierfür den Wählhebel betätigen muss. Das heißt über die erfindungsgemäß vorgesehenen Mittel ist auch bei mechanisch gekoppeltem Wählhebel mit dem Positionssteller ein automatischer Parksperrenschaltbetrieb möglich.

Der Schaltbetrieb zum automatischen Einlegen der Parksperrenstellung erfolgt, über die erfindungsgemäß vorgesehenen Mittel gesteuert, über den Positionssteller, der hierfür entsprechend betätigt oder bewegt werden muss. Um zu vermeiden, dass aufgrund der mechanischen Kopplung des Positionsstellers mit dem Wählhebel dieser bei einer automatischen Bewegung des Positionsstellers kopplungsbedingt mitbewegt wird, sind nach einer vorteilhaften Weiterbildung des Erfindungsgedankens Lösemittel zum gleichzeitigen Lösen der mechanischen kraftschlüssigen Kopplung des Wählhebels mit dem Positionssteller vorgesehen. Das heißt, wenn der Positionssteller automatisch betätigt wird ist der Wählhebel nicht mehr mit ihm gekoppelt, so dass der Wählhebel trotz der Bewegung des Positionsstellers nicht bewegt wird. Dies bietet einen Schutz dahingehend, dass der Fahrer oder die Insassen durch den sich ohne die erfindungsgemäß vorgesehene Entkopplung zusammen mit dem Positionssteller schnell und sehr dynamisch bewegenden Wählhebel, der dann in die "P"-Stellung bewegt werden würde, verletzt werden oder dass Gegenstände, die sich im Bewegungsweg des Wählhebels befinden würden beschädigt werden können. Die Getriebeschaltung erfolgt also entkoppelt zum Wählhebel. Auf die genauen Einzelheiten diesbezüglich wird nachfolgend noch eingegangen.

Nach einer Weiterbildung des Erfindungsgedankens kann vorgesehen sein, dass die Mittel zum Schalten des Automatikgetriebes einen direkt oder indirekt auf den Positionssteller einwirkenden, bei Vorliegen des wenigstens einen Betriebsparameters betätigbaren Aktuator umfassen. Dieser Aktuator kann beispielsweise am Getriebe selbst befestigt sein, er kann im Getriebe integriert sein oder er kann sich an einer beliebigen Stelle im Fahrzeug befinden. Bei einer Anordnung am oder im Getriebe sollte zweckmäßigerweise eine direkte Kopplung des Aktuators mit dem Positionssteller realisiert sein, bei einer getriebefernen Positionierung wird eine indirekte Kopplung bevorzugt.

Der Aktuator selbst kann ein beliebiges Betätigungselement sein, das insoweit lediglich die Aufgabe zu erfüllen hat, dass der Positionssteller in die entsprechende der Parksperrenstellung des Getriebes zugeordnete Position bewegt wird. Er kann elektrisch ansteuerbar sein, z. B. über eine geeignete Steuerungseinrichtung und die Fahrzeugbatterie. Denkbar ist auch eine hydraulische Ansteuerung, z. B. über den Hydraulikdruck im Getriebe, der bei den letzten Motorumdrehungen noch vorhanden ist, oder den Druck in einer Druckerzeugungseinheit für die Niveauregelung oder einem Druckspeicher, der durch die beschriebenen Einrichtungen aufgeladen wird. Auch eine hydrostatische Betätigung des Aktuators z. B. durch Einbinden in den Kühlwasserkreislauf ist denkbar. Daneben kann ein pneumatisch betätigbarer Aktuator vorgesehen sein, der z. B. über den Kompressor für eine etwaige vorhandene Luftfederung, durch die Sekundärluftpumpe oder den Unterdruck im Bremskraftverstärker oder einen Druckspeicher, der durch die beschriebenen Einrichtungen aufgeladen wird, gespeist wird. Schließlich ist auch eine mechanische Ansteuerung des Aktuators denkbar, der z. B. per Federkraft, die in irgendeiner Weise während des Fahrzeugbetriebs erzeugt wird bzw. wozu eine entsprechende Feder gespannt wird. Im Falle einer hydraulischen, hydrostatischen oder pneumatischen Ansteuerung, wenn also der Aktuator in einen Steuerkreislauf, in dem das jeweilige Ansteuermedium zirkuliert, eingebunden ist, ist zwangsläufig ein oder sind mehrere Ventile, zweckmäßigerweise über eine Steuerung ansteuerbare Elektroventile, vorgesehen.

Das Lösemittel kann ein bei Vorliegen des wenigstens einen Betriebsparameters oder bei Betätigung des das Automatikgetriebe schaltenden Mittels betätigbares mechanisches Kopplungsmittel zum Öffnen oder Schließen der mechanischen Kopplung des Wählhebels mit dem Positionssteller sein. Liegen also die den automatischen Schaltbetrieb initiierenden Betriebsparameter vor oder wird das automatische Schaltmittel bereits betätigt, so wird über die erfindungsgemäß als mechanisches Kopplungsmittel ausgebildeten Lösemittel die Zug- oder Druckverbindung des Wählhebels mit dem Positionssteller unterbrochen und der Wählhebel vom Positionssteller entkoppelt. Hierzu öffnet das Kopplungsmittel zweckmäßigerweise die Verbindung des Wählhebels zu der Zug-Druck-Verbindung, alternativ besteht die Möglichkeit, dass die Verbindung des Positionsstellers zu der Zug-Druck-Verbindung geöffnet bzw. nach Einnehmen der Parksperrenendstellung auch wieder geschlossen wird. Welche mechanische Verbindung nun geöffnet oder geschlossen wird ist eine Frage der Auslegung, da jeder Entkopplungspunkt gewährleistet, dass der Wählhebel bei einer Betätigung des Positionsstellers nicht betätigt wird.

Nach einer vorteilhaften Ausbildung des Erfindungsgedankens kann das Kopplungsmittel ein Klemm-, Rast- oder Schnappelement sein, das an der Zug-Druck-Verbindung angeordnet und lösbar mit dem Wählhebel verbindbar ist. Das Klemm-, Rast- oder Schnappelement wird also zum Entkoppeln einfach aus seiner Klemm-, Rast- oder Schnappverbindung mit dem Wählhebel gelöst, die es nach Einnehmen der Parksperrenendstellung aber wieder einnimmt, damit in einem nachfolgenden fahrerinitiierten Wählbetrieb die mechanische Kopplung zum Positionssteller wieder gewährleistet ist. Das Kopplungsmittel kann dabei eine gegen eine Rückstellkraft gelagerte Rastklinke sein, die ein Rastelement am Wählhebel in der Verbindungsstellung hinter- oder übergreift oder die in ein entsprechendes Rastelement eingreift.

Das Lösemittel, insbesondere das Kopplungsmittel bzw. die Rastklinke kann mechanisch, elektrisch, hydraulisch, pneumatisch oder hydrostatisch betätigbar sein, das heißt sie ist insbesondere im Falle einer elektrischen, hydraulischen, pneumatischen oder hydrostatischen Betätigung ebenfalls in einen entsprechenden Steuerkreis eingebunden.

Nach einer vorteilhaften Erfindungsausgestaltung kann vorgesehen sein, dass das Lösemittel, insbesondere das Kopplungsmittel oder die Rastklinke und das Mittel zum Schalten des Automatikgetriebes, insbesondere der Aktuator miteinander derart bewegungsgekoppelt sind, dass das Lösemittel, insbesondere das Kopplungsmittel oder die Rastklinke bei einer Betätigung des Schaltmittels, insbesondere des Aktuators ebenfalls betätigt wird. Das heißt bei einer Betätigung des Schaltmittels, also beispielsweise des Aktuators wird automatisch auch das Lösemittel über das Schaltmittel bzw. den Aktuator aufgrund der Bewegungskopplung betätigt. Es ist letztlich also lediglich ein Element, nämlich das Schaltmittel oder der Aktuator anzusteuern, die Betätigung des Lösemittels, also beispielsweise das Entrasten der Rastklinke erfolgt dann aufgrund des Aktuatorbetriebs und der Bewegungskopplung automatisch. Dabei ist der Aktuator zweckmäßigerweise über eine mechanische Verbindung mit dem an der Zug-Druck-Verbindung angeordneten Kopplungsmittel, insbesondere der Rastklinke verbunden. Der Aktuator selbst kann bei einer getriebefernen Anordnung über die mechanische Verbindung, mit der er mit dem Kopplungsmittel gekoppelt ist, auch gleichzeitig indirekt mit dem Positionssteller verbunden sein.

Um zu ermöglichen, dass der Fahrer nach Abstellen des Fahrzeugs dann, wenn er es wieder in Betrieb nehmen möchte, auch ohne Probleme das Automatikgetriebe entsprechend schalten kann, z. B. durch Einlegen der Getriebestellung "D", ist es zweckmäßig, wenn der Wählhebel nach dem Lösen der Kopplung automatisch eine Parksperrenposition einnimmt, in der die erneute Kopplung zum Positionsgeber erfolgt. Zum einen wird also automatisch der Wählhebel in die Stellung "P" gebracht, so dass dem Fahrer angezeigt wird, dass die Parksperrenposition automatisch eingenommen und das Fahrzeug gesichert ist. Zum anderen erfolgt in dieser Stellung die erneute automatische Kopplung zum Positionsgeber, so dass eine Bewegung des Wählhebels automatisch in einer mechanisch bedingten Betätigung des Positionsgebers resultiert. Dabei kann der Wählhebel nach einer ersten Erfindungsausgestaltung selbsttätig in die "P"-Stellung übergehen, beispielsweise durch entsprechende Lagerung. Ist er entkoppelt, so ist er letztlich frei beweglich, so dass er beispielsweise eigengewichtsbedingt in die "P"-Stellung schwenken kann. Daneben besteht natürlich auch die Möglichkeit, ein Stellmittel vorzusehen, das den Wählhebel nach seiner Entkopplung in die Parksperrenstellung "P" überführt. Das Stellmittel kann z. B. eine Stellfeder sein, auch ein elektrisches Stellmittel, insbesondere ein Stellmotor ist denkbar. Besonders vorteilhaft ist, wenn der Wählhebel die Parksperrenposition "P" langsamer einnimmt als das Automatikgetriebe in die Parksperrenstellung geschaltet wird. Das heißt die Dynamik der Hebelbewegung ist wesentlich langsamer als die Schaltbewegung des Getriebes selbst, so dass irgendwelche Verletzungen oder dergleichen ausgeschlossen sind. Beispielsweise kann eine Stellfeder so ausgelegt sein, dass sie sich relativ langsam entspannt, ein elektrisches Stellmittel kann den Wählhebel ebenfalls ohne Schwierigkeiten entsprechend langsam bewegen.

Wie bereits beschrieben werden als Betriebsparameter der Ausschaltzustand der Zündung und die Ist-Geschwindigkeit, die kleiner als ein Schwellwert sein muss, erfasst , wobei die Parameter an eine Steuerungseinrichtung, die den Betrieb des Schaltmittels und des Lösemittels steuert, gegeben werden. Selbstverständlich kann in dieser Steuerungseinrichtung die geeignete Sensorik zur Erfassung bzw. Auswertung der Betriebsparameter angeordnet sein. Ferner ist es zweckmäßig, wenn ein Mittel zum Ausgeben eines Alarmsignals an den Fahrer vorgesehen ist, wenn das Automatikgetriebe nicht in die Parksperrenstellung oder der Wählhebel nicht in die Parksperrenposition bringbar ist, oder wenn die mechanische Kopplung nicht lösbar oder nicht wieder herstellbar ist. Sobald also in irgendeiner Form im Rahmen des erfindungsgemäßen automatischen Betriebes ein Fehler auftritt, wird dies beispielsweise über eine akustische Anzeige oder eine Blinkanzeige oder dergleichen angezeigt, so dass er selbsttätig den Schaltzustand überprüfen und gegebenenfalls ändern kann.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipskizze einer Getriebeschalteinrichtung im normalen Fahrbetrieb,
- Fig. 2: die Getriebeschalteinrichtung aus Fig. 1 während des automatischen Einlegens der Parksperrenstellung des Getriebes,

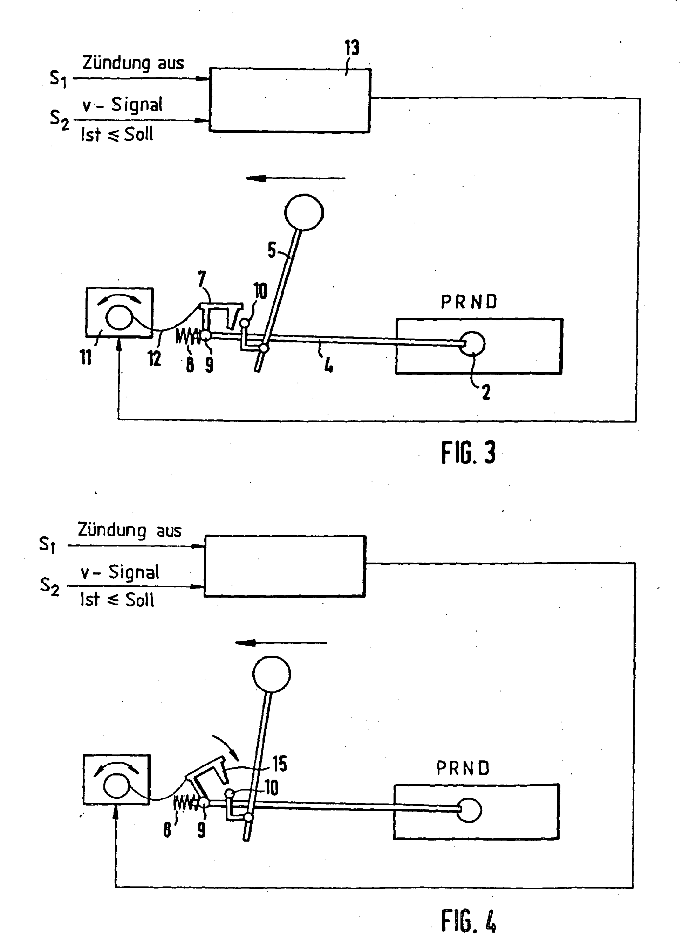

- Fig. 3: die Getriebeschalteinrichtung aus Fig. 2 nach dem Einnehmen der Parksperrenposition, und
- Fig. 4: die Getriebeschalteinrichtung bei der erneuten mechanischen Ankopplung des Wählhebels an das Schaltgestänge.

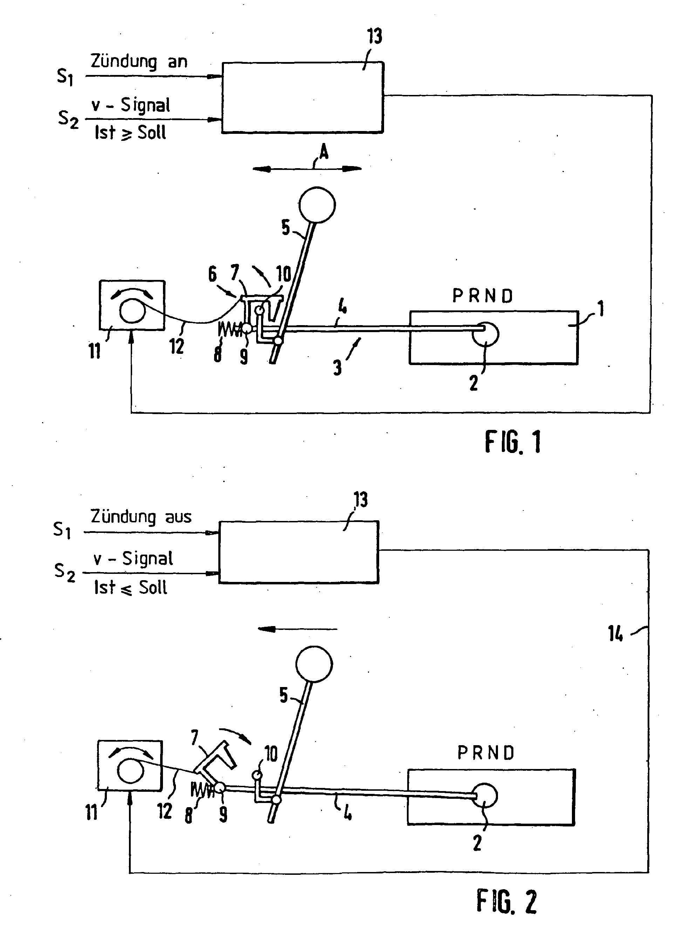

Fig. 1 zeigt in Form einer Prinzipskizze eine Getriebeschalteinrichtung eines erfindungsgemäßen Kraftfahrzeugs. Ein Automatikgetriebe 1 umfasst einen Positionssteller 2, über den das Getriebe zwischen unterschiedlichen Schaltstellungen, im gezeigten Beispiel "P", "R", "N" und "D" geschalten werden kann. Hierzu ist der Positionssteller über eine mechanische Kopplung 3 umfassend eine Zug-Druck-Verbindung 4 z. B. in Form eines Gestänges oder eines Seilzuges mit einem Wählhebel 5 mechanisch verbunden. Der Wählhebel 5 ist, wie der Doppelpfeil A zeigt, längsbeweglich gelagert, er kann vom Fahrer in die gewünschte Position eines bestimmten Getriebeschalterzustands verschoben werden. Aufgrund der mechanischen Kopplung wird die Zug-Druck-Verbindung bei einer Hebelbewegung ebenfalls bewegt, und mit ihr auch der Positionssteller 2, der dann das Automatikgetriebe 1 entsprechend schaltet. Der Wählhebel 5 ist über ein mechanisches Kopplungsmittel 6 in Form einer Rastklinke 7 mit der Zug-Druck-Verbindung 4 mechanisch gekoppelt. Die Rastklinke 7 ist gegen eine Rückstellkraft, erzeugt über eine Stellfeder 8 schwenkbar um ein Schwenklager 9 gelagert. Sie übergreift einen am Wählhebel 5 vorgesehenen Rastzapfen 10 kraftschlüssig, so dass sich eine kraftschlüssige mechanische Kopplung ergibt. Wird nun der Wählhebel 5 verschoben so wird diese Verschiebebewegung über das mechanische Kopplungsmittel 6 in Form der Rastklinke 7 auf die Zug-Druck-Verbindung und über diese auf den Positionssteller 2 übertragen.

Gezeigt ist ferner ein Aktuator 11, der über eine mechanische Zugverbindung 12, im gezeigten Beispiel ein Zugseil mit der federgelagerten Rastklinke 7 verbunden ist. Der Aktuator 11 ist über eine Steuerungseinrichtung 13 elektrisch ansteuerbar, es handelt sich z. B. um einen kleinen Elektromotor, der zum Aufwickeln oder Abrollen des Zugseiles 12 dient. Der Steuerungseinrichtung werden im gezeigten Beispiel zwei Signale S₁ und S₂ gegeben, die zur Erfassung von Betriebsparametern dienen, auf deren Grundlage die Ansteuerung des Aktuators 11 über die Steuerungseinrichtung 13 erfolgt. Als Signal S₁ wird ein Signal angelegt, das im Betriebszustand der Zündung angibt, also ob die Zündung an oder aus ist. Als Signal S₂ wird ein Geschwindigkeitssignal gegeben, das die Ist-Geschwindigkeit angibt. Die Steuerungseinrichtung verarbeitet nun beide Signale S₁ und S₂, wobei das Signal S₂ mit einem Sollwert verglichen wird. Die automatische Ansteuerung des Automatikgetriebes zum Einnehmen der Parksperrenstellung kann nur dann erfolgen, wenn als Signal S₁ "Zündung aus" anliegt und wenn das Signal S₂ bzw. das definierte Ist-Geschwindigkeitssignal kleiner als der Sollwert ist.

Während Fig. 1 die Getriebeschalteinrichtung im Fahrbetrieb zeigt (es ist der Rückwärtsgang "R" eingelegt), zeigt Fig. 2 die Situation wenn das Fahrzeug abgestellt und der Motor aus ist. An der Steuerungseinrichtung liegen die Signale an, dass die Zündung aus ist und dass das Ist-Geschwindigkeitssignal kleiner als der Sollwert ist. Über die Steuerleitung 14 wird nun der Aktuator 11 angesteuert. Das Zugseil 12 wird aufgewickelt und angezogen, was dazu führt, dass die Rastklinke 7 um ihr Schwenklager 9 etwas herumgeschwenkt und außer Eingriff mit dem Rastzapfen 10 gebracht wird. Gleichzeitig wird die Stellfeder 8 dabei etwas gespannt. Durch das Anziehen des Zugseils wird nun die Zug-Druck-Verbindung ebenfalls nach links in Fig. 2 gezogen. Der Positionssteller 2 nimmt die Schaltposition "P" ein, das Automatikgetriebe wird in die Parksperrenstellung geschaltet.

Das Automatikgetriebe ist nun automatisch in die Parksperrenstellung "P" geschaltet. Die Steuerungseinrichtung 13 steuert den Aktuator 11 an, dass er das Zugseil 12 wieder entlastet, die Rastklinke fällt wieder aufgrund der Entspannung der Stellfeder 8 nach unten. Der Wählhebel 5 ist nach wie vor entkoppelt. Er fällt nun z. B. selbständig in Richtung der Wählhebel-Parksperrenposition "P", im gezeigten Beispiel z. B. ein kurzes Stück nach links. Diese selbständige Positionseinnahme kann durch entsprechende Lagerung des Wählhebels realisiert werden. Alternativ ist es auch denkbar, ein geeignetes elektronisches Stellmittel z. B. in Form eines Elektromotors vorzusehen.

Geht der Wählhebel in die Position "P" über, so wird z.B. der Rastzapfen 10 in Richtung der Rastklinke 7 bewegt und gegen diese geführt. Die vordere Schrägfläche 15 der Rastklinke 7 gleitet entlang des Rastzapfens 10, so dass die Rastklinke hinter den Rastzapfen 10 schnappen und die mechanische Verbindung des Wählhebels zur Zug-Druck-Verbindung 4 und damit zum Positionssteller 2 wieder automatisch angekoppelt wird.

## Patentansprüche

1. Kraftfahrzeug mit einem Automatikgetriebe mit über einen Wählhebel, der mit einem getriebeseitigen Positionssteller mechanisch gekoppelt ist erfolgenden manuellen Schaltbetätigung, wobei Mittel zum automatischen Schalten des Automatikgetriebes (1) in eine Parksperrenstellung in Abhängigkeit wenigstens eines Betriebsparameters (S₁, S₂) vorgesehen sind,
**dadurch gekennzeichnet,**
**dass** als Betriebsparameter (S₁, S₂) der Betriebszustand des Motors und die Fahrzeuggeschwindigkeit dienen.

2. Kraftfahrzeug nach Anspruch 1,
**dadurch gekennzeichnet,**
**dass** Lösemittel (6) zum gleichzeitigen Lösen der mechanischen kraftschlüssigen Kopplung des Wählhebels (5) mit dem Positionssteller (2) vorgesehen sind.

3. Kraftfahrzeug nach Anspruch 1 oder 2,
**dadurch gekennzeichnet,**
**dass** die Mittel zum Schalten des Automatikgetriebes (1) einen direkt oder indirekt auf den Positionssteller (2) einwirkenden, bei vorliegen des wenigstens einen Betriebsparameters betätigbaren Aktuator (11) umfassen.

4. Kraftfahrzeug nach Anspruch 3,
**dadurch gekennzeichnet,**
**dass** der Aktuator (11) zu seiner Betätigung elektrisch, hydraulisch, hydrostatisch, pneumatisch oder mechanisch ansteuerbar oder betätigbar ist.

5. Kraftfahrzeug nach einem der Ansprüche 2 bis 4,
**dadurch gekennzeichnet,**
**dass** das Lösemittel ein bei vorliegen des wenigstens einen Betriebsparameters oder bei Betätigung des das Automatikgetriebe (1) schaltenden Mittels betätigbares mechanisches Kopplungsmittel (6) zum Öffnen oder Schließen der mechanischen Kopplung des Wählhebels (5) mit dem Positionssteller (2) ist.

6. Kraftfahrzeug nach Anspruch 5,
**dadurch gekennzeichnet,**
**dass** die mechanische Kopplung eine Zug-Druck-Verbindung (4) ist, wobei des Kopplungsmittel (6) die Verbindung des Wählhebels (5) zu
der Zug-Druck-Verbindung oder die Verbindung des Positionsstellers zu der Zug-Druck-Verbindung öffnet und schließt.

7. Kraftfahrzeug nach Anspruch 6,
**dadurch gekennzeichnet,**
**dass** das Kopplungsmittel (6) ein Klemm-, Rast- oder Schnappelement ist, das an der Zug-Druck-Verbindung (4) angeordnet ist und lösbar mit dem Wählhebel (5) verbindbar ist.

8. Kraftfahrzeug nach Anspruch 7,
**dadurch gekennzeichnet,**
**dass** das Kopplungsmittel (6) eine gegen eine Rückstellkraft (8) gelagerte Rastklinke (7) ist, die ein Rastelement (10) am Wählhebel (5) in der Verbindungsstellung hintergreift.

9. Kraftfahrzeug nach einem der Ansprüche 2 bis 8,
**dadurch gekennzeichnet,**
**dass** Lösemittel, insbesondere das Kopplungsmittel (6) mechanisch, elektrisch, hydraulisch, pneumatisch oder hydrostatisch betätigbar ist.

10. Kraftfahrzeug nach einem der vorangehenden Ansprüche,
**dadurch gekennzeichnet, dass**
dass das Lösemittel, insbesondere das Kopplungsmittel (6) oder die Rastklinke (7) und das Mittel zum Schalten des Automatikgetriebes(1), insbesondere der Aktuator (11) miteinander derart bewegungsgekoppelt sind, dass das Lösemittel, insbesondere das Kopplungsmittel (6) oder die Rastklinke (7) bei einer Betätigung des Schaltmittels, insbesondere des Aktuators (11) ebenfalls betätigt wird.

11. Kraftfahrzeug nach Anspruch 10,
**dadurch gekennzeichnet,**
**dass** der Aktuator (11) über eine mechanisches Verbindung, insbesondere ein Zugseil (12) mit dem an der Zug-Druck-Verbindung (4) angeordneten Kopplungsmittel (6), insbesondere der Rastklinke (7) verbunden ist.

12. Kraftfahrzeug nach Anspruch 11,
**dadurch gekennzeichnet,**
**dass** der Aktuator (11) über die mechanische Verbindung (12) gleichzeitig indirekt mit dem Positionssteller verbunden ist.

13. Kraftfahrzeug nach einem der vorangehenden Ansprüche,
**dadurch gekennzeichnet,**
**dass** der Wählhebel (5) nach dem Lösen der Kopplung automatisch eine Parksperrenposition einnimmt, in der er erneut mit dem Positionsgeber (2) koppelbar ist.

14. Kraftfahrzeug nach Anspruch 13,
**dadurch gekennzeichnet,**
**dass** der Wählhebel (5) selbsttätig oder mittels eines Stellmittels in die Parksperrenstellung übergeht.

15. Kraftfahrzeug nach Anspruch 14,
**dadurch gekennzeichnet,**
**dass** das Stellmittel eine Stellfeder oder ein elektrisches Stellmittel, insbesondere ein Stellmotor ist.

16. Kraftfahrzeug nach einem der Ansprüche 13 bis 15,
**dadurch gekennzeichnet,**
**dass** der Wählhebel (5) die Parksperrenposition langsamer einnimmt als das Automatikgetriebe (1) in die Parksperrenstellung schaltbar ist.

17. Kraftfahrzeug nach einem der vorangehenden Ansprüche,
**dadurch gekennzeichnet,**
**dass** als Betriebsparameter (S₁, S₂) der Ausschaltzustand der Zündung und die Ist-Geschwindigkeit, die kleiner als ein Schwellwert sein muss, dient, die an eine den Betrieb des Schaltmittels und den des Lösemittels steuernde Steuerungseinrichtung (13) gegeben werden.

18. Kraftfahrzeug nach einem der vorangehende Ansprüche,
**dadurch gekennzeichnet,**
**dass** Mittel zum Ausgeben eines Alarmsignals an den Fahrer vorgesehen sind, wenn das Automatikgetriebe nicht in die Parksperrenstellung oder der Wählhebel nicht in die Parksperrenposition bringbar ist oder wenn die mechanische Kopplung nicht lösbar oder nicht wieder herstellbar ist.

## Claims

1. Vehicle with automatic gearing with manual gear-shift actuation by means of a gearstick lever that is mechanically coupled, on the gearing side, to a positioning device, whereby there are means of automatically shifting the automatic gearing (1) into a reverse-blocking position, on the basis of at least one operating parameter (S₁, S₂),
**characterized in that** the operating condition of the engine and the speed of the vehicle serve as operating parameters (S₁, S₂).

2. Vehicle in accordance with claim 1,
**characterized in that** there are releasing means (1) for simultaneous release of the mechanical force-locking coupling of the gearshift lever (5) with the positioning device (2).

3. Vehicle in accordance with claims 1 or 2,
**characterized in that** the means for shifting the automatic gearing (1) include an actuator (11) that can be operated in the case of the presence of an operating parameter and that acts directly or indirectly on the positioning device (2).

4. Vehicle in accordance with claim 3,
**characterized in that** the actuator (11) can be driven electrically, hydraulically, hydrostatically, pneumatically or mechanically.

5. Vehicle in accordance with claims 2 to 4,
**characterized in that** the releasing means is an operable, mechanical coupling means (6), which shifts when the automatic gearing (1) is operated, for opening or closing the mechanical connection of the gearstick lever (5) with the positioning device (2).

6. Vehicle in accordance with claim 5,
**characterized in that** the mechanical coupling is a push-pull connection (4), whereby the coupling means (6) opens and closes the connection between the gearstick lever (5) and the push-pull connection or the between the positioning device and the push-pull connection.

7. Vehicle in accordance with claim 6,
**characterized in that** the coupling means (6) is a clamping, locking or catch element that is disposed on the push-pull connection (4) and that can be releasably connected to the gearstick lever (5).

8. Vehicle in accordance with claim 7,
**characterized in that** the coupling means (6) is a detent (7), which, in the connection position, engages a catch element (10) on the gearstick lever (5), supported against a restoring force (8).

9. Vehicle in accordance with claims 2 to 8,
**characterized in that** the releasing means, particularly the coupling means (6), can be operated mechanically, electrically, hydraulically, pneumatically or hydrostatically.

10. Vehicle in accordance with one of the preceding claims,
**characterized in that** the releasing means, particularly the coupling means (6) or the detent (7) and the means of shifting the automatic gearing (1), particularly the actuator (11), a connected to each other such that the releasing means, particularly the coupling means (6) or the detent (7) are likewise operated when the shifting means, particularly the actuator (11), is operated.

11. Vehicle in accordance with claim 10,
**characterized in that** the actuator (11) is mechanically connected, particularly by means of a load cable, to the coupling means (6) disposed on the push-pull connection (4), particularly the detent (7).

12. Vehicle in accordance with claim 11,
**characterized in that** the actuator (11) is also indirectly connected, at the same time, by means of the mechanical connection (12), to the positioning device.

13. Vehicle in accordance with one of the above claims,
**characterized in that,** following releasing, the gearstick lever (5) automatically takes up a position in which it inhibits reversing and in which it can be recoupled with the positioning device (2).

14. Vehicle in accordance with claim 13,
**characterized in that,** by means of an adjustor, the gearstick lever (5) automatically goes over into the position in which reversing is blocked.

15. Vehicle in accordance with claim 14,
**characterized in that that** the adjustor is an adjusting spring or an electrical adjustor, particularly an adjusting motor.

16. Vehicle in accordance with claims 13 to 15,
**characterized in that that** the gearstick lever (5) takes up the position in which reversing is blocked more slowly than the automatic gearing (1) can be shifted into the position in which reversing is blocked.

17. Vehicle in accordance with one of the preceding claims,
**characterized in that** the condition in which the ignition is switched off and the actual speed, which must be less than a threshold value, serve as operating parameters (S₁, S₂), and **in that** these parameters are supplied to a control device (13) that controls the operation of the shifting means and or the releasing means.

18. Vehicle in accordance with one of the preceding claims,
**characterized in that** there are means of giving out an alarm signal to the driver when the automatic gearing or the gearstick lever cannot be brought into the position in which reversing is blocked, or if the mechanical coupling cannot be released or cannot be regained.

## Revendications

1. Véhicule automobile équipé d'une boîte de vitesses automatique avec un actionnement de changement de vitesses manuel s'effectuant par l'intermédiaire d'un levier de vitesses qui est couplé mécaniquement à un transmetteur de position, des moyens pour le changement automatique de vitesses de la boîte de vitesses (1) étant prévus dans une position d'arrêt fixe en fonction d'au moins un paramètre de fonctionnement (S₁, S₂),
**caractérisé en ce que** l'état de fonctionnement du moteur et la vitesse du véhicule servent de paramètres de fonctionnement (S₁, S₂).

2. Véhicule automobile selon la revendication 1,
**caractérisé en ce que** des moyens de détachement (6) pour le détachement simultané de l'accouplement à force mécanique du levier de vitesses (5) avec le transmetteur de position sont prévus.

3. Véhicule automobile selon la revendication 1 ou 2,
**caractérisé en ce que** les moyens pour le changement de vitesses de la boîte de vitesses automatique (1) comportent un actionneur (11) agissant directement ou indirectement sur le transmetteur de position (2), pouvant être actionné lors de la présence de l'au moins un paramètre de fonctionnement.

4. Véhicule automobile selon la revendication 3,
**caractérisé en ce que** l'actionneur (11) peut être commandé ou actionné pour son actionnement électriquement, hydrauliquement, hydrostatiquement, pneumatiquement ou mécaniquement.

5. Véhicule automobile selon l'une des revendications 2 à 4,
**caractérisé en ce que** le moyen de détachement est un moyen d'accouplement (6) mécanique, pouvant être actionné lors de la présence de l'au moins un paramètre de fonctionnement ou lors de l'actionnement du moyen de changement de vitesses de la boîte de vitesses automatique (1) pour l'ouverture ou la fermeture de l'accouplement mécanique du levier de vitesses (5) avec le transmetteur de position (2).

6. Véhicule automobile selon la revendication 5,
**caractérisé en ce que** l'accouplement mécanique est une liaison traction-compression, le moyen d'accouplement (6) ouvrant et fermant la liaison du levier de vitesses (5) à la liaison traction-compression ou la liaison du transmetteur de position à la liaison traction-compression.

7. Véhicule automobile selon la revendication 6,
**caractérisé en ce que** le moyen d'accouplement (6) est un élément de serrage, d'encliquetage ou à déclic qui est disposé sur la liaison traction-compression (4) et peut être relié de manière détachable au levier de vitesses (5).

8. Véhicule automobile selon la revendication 7,
**caractérisé en ce que** le moyen d'accouplement (6) est un cliquet d'encliquetage (7) logé contre une force de rappel (8), qui vient en prise derrière un élément d'encliquetage (10) sur le levier de vitesses (5) dans la position de liaison.

9. Véhicule automobile selon l'une des revendications 2 à 8,
**caractérisé en ce que** le moyen de détachement, en particulier le moyen d'accouplement (6) peut être actionné mécaniquement, électriquement, hydrauliquement, pneumatiquement ou hydrostatiquement.

10. Véhicule automobile selon l'une des revendications 1 à 9,
**caractérisé en ce que** le moyen de détachement, en particulier le moyen d'accouplement (6) ou le cliquet d'encliquetage (7) et le moyen de changement de vitesses de la boîte de vitesses automatique (1), en particulier l'actionneur (11) sont couplés en déplacement entre eux de sorte que le moyen de détachement, en particulier le moyen d'accouplement (6) ou le cliquet d'encliquetage (7) est également actionné lors d'un actionnement du moyen de commutation, en particulier de l'actionneur (11).

11. Véhicule automobile selon la revendication 10,
**caractérisé en ce que** l'actionneur (11) est relié par le biais d'une liaison mécanique, en particulier un câble de traction (12) au moyen d'accouplement (6) disposé sur la liaison traction-compression (4), en particulier au cliquet d'encliquetage (7).

12. Véhicule automobile selon la revendication 11,
**caractérisé en ce que** l'actionneur (11) est simultanément relié par le biais de la liaison (12) mécanique indirectement au transmetteur de position.

13. Véhicule automobile selon l'une des revendications 1 à 12,
**caractérisé en ce que** le levier de vitesses (5) occupe automatiquement après le détachement de l'accouplement une position d'arrêt fixe, dans laquelle il peut être accouplé de nouveau au transmetteur de position (2).

14. Véhicule automobile selon la revendication 13,
**caractérisé en ce que** le levier de vitesses (5) passe automatiquement ou à l'aide d'un moyen de commande dans la position d'arrêt fixe.

15. Véhicule automobile selon la revendication 14,
**caractérisé en ce que** le moyen de commande est un ressort de réglage ou un moyen de commande électrique, en particulier un servomoteur.

16. Véhicule automobile selon l'une des revendications 13 à 15,
**caractérisé en ce que** le levier de vitesses (5) prend plus lentement la position d'arrêt fixe que la boîte de vitesses automatique (1) se met dans la position d'arrêt fixe.

17. Véhicule automobile selon l'une des revendications 1 à 16,
**caractérisé en ce que** l'état de désactivation de l'allumage et la vitesse réelle qui doit être inférieure à une valeur seuil servent de paramètres de fonctionnement (S₁, S₂), lesquels sont transmis à un dispositif de commande (13) commandant le fonctionnement du moyen de commutation et celui du moyen de détachement.

18. Véhicule automobile selon l'une des revendications 1 à 17,
**caractérisé en ce que** des moyens pour l'émission d'un signal d'alarme à l'attention du conducteur sont prévus, si la boîte de vitesses automatique ne peut pas être amenée dans la position d'arrêt fixe ou le levier de vitesses dans la position d'arrêt fixe ou si l'accouplement mécanique ne peut pas être détaché ou établi de nouveau.
